# DEMANDE DE BREVET EUROPEEN

(11) **EP 2 529 960 A1**
(43) Date de publication de la demande: **05.12.2012**
(21) Numéro de dépôt: 12167949.2
(22) Date de dépôt: 14.05.2012
(51) Int. Cl.: B60G 15/06, F16C 19/10, F16C 35/067

(54) **Butée de suspension pourvu de languettes de montage**

(30) Priorité: 30.05.2011 FR 1101666
(71) Demandeur: NTN-SNR Roulements, 74000 Annecy (FR)
(72) Inventeur: Chamousset, Anthony, 74150 Sales (FR)
(74) Mandataire: Novagraaf Technologies

(57) **Abrégé**

L'invention se rapporte à une butée de suspension 10 pour une jambe de suspension pourvue d'un ressort à boudin 12, la butée de suspension 10 étant destinée à être solidarisée à une pièce métallique d'interface 64 comportant une portion tubulaire 62. La butée comporte un palier de butée 14, une pièce d'appui 16 pour transmettre au palier de butée des efforts exercés par le ressort 12 un couvercle 18 délimitant avec la pièce d'appui 16 un logement 15 pour le palier, le couvercle comportant une douille de fixation tubulaire 52 destinée à coopérer avec la portion tubulaire de la pièce métallique d'interface. La douille est pourvue d'une ou plusieurs languettes élastiques 56 faisant saillie radialement vers l'intérieur et apte à se déformer de manière élastique lors de l'emmanchement de la douille de fixation tubulaire 52 sur la portion tubulaire 62 de la pièce métallique d'interface 64.

## Description

### DOMAINE TECHNIQUE DE L'INVENTION

L'invention se rapporte à une butée de suspension pour une jambe de suspension de véhicule, notamment pour une jambe de suspension télescopique à ressort hélicoïdal, par exemple pour une roue directrice de véhicule automobile. Elle se rapporte plus spécifiquement à une butée de suspension pourvue d'un palier destiné à accompagner et guider la rotation de l'extrémité supérieure du ressort hélicoïdal dans les phases de compression et d'extension de la jambe.

### ETAT DE LA TECHNIQUE ANTERIEURE

Traditionnellement, les butées de suspension de ce type sont assemblées à la caisse du véhicule au niveau d'une pièce d'interface couramment appelée « bloc filtrant », constituée d'une tôle surmoulée par un caoutchouc de filtration. La butée de suspension constitue un sous-ensemble préassemblé, livré tel quel au constructeur automobile qui assure son montage sous la caisse du véhicule. Plus précisément, le bloc filtrant est tout d'abord fixé à la caisse, avant que la butée soit positionnée puis fixée au bloc filtrant. Entre le positionnement de la butée sous le bloc filtrant et sa fixation définitive avec l'ensemble de la jambe de suspension, le véhicule en cours d'assemblage doit subir plusieurs opérations, qui peuvent engendrer des vibrations, chocs, voire un déplacement de la caisse d'un poste à un autre sur la chaine d'assemblage. Il est alors nécessaire d'assurer un maintien de la butée de suspension au bloc filtrant, avant sa fixation définitive.

Lorsque le bloc filtrant présente des parties en caoutchouc, il est aisé d'emmancher en force la butée de suspension sous le bloc filtrant, en déformant le caoutchouc du bloc filtrant, ce qui assure un maintien suffisant jusqu'à la fixation définitive de la butée de suspension.

Toutefois, cette méthode n'est pas appropriée lorsque la pièce d'interface de fixation à la caisse du véhicule n'est plus un bloc filtrant, mais une pièce métallique à nu, par exemple une tôle emboutie ou une pièce en aluminium moulée par injection. En effet, l'effort qu'il conviendrait d'appliquer pour un emmanchement en force serait bien trop important, et ne permettrait pas un repositionnement dans les phases ultérieures de l'assemblage du véhicule, jusqu'à la fixation définitive de la butée de suspension.

### EXPOSE DE L'INVENTION

L'invention vise à permettre un pré-assemblage aisé d'une butée de suspension à une pièce d'interface rigide.

Pour ce faire est proposé selon un premier aspect de l'invention une butée de suspension pour une jambe de suspension d'une caisse de véhicule, la jambe étant pourvue d'un ressort à boudin, la butée de suspension étant destinée à être solidarisé à une pièce métallique d'interface à la caisse du véhicule, la pièce métallique d'interface comportant une portion tubulaire, la butée comportant :
- un palier de butée ;
- une pièce d'appui pour transmettre au palier de butée des efforts exercés par le ressort ; et
- un couvercle délimitant avec la pièce d'appui un logement pour le palier, le couvercle comportant une douille de fixation tubulaire destinée être emmanchée sur la portion tubulaire de la pièce métallique d'interface et définissant un axe géométrique de référence du couvercle, le couvercle étant pourvu d'une ou plusieurs languettes élastiques faisant saillie radialement vers l'axe de référence du couvercle et aptes à se déformer radialement de manière élastique lorsque la douille de fixation tubulaire est emmanchée sur la portion tubulaire de la pièce métallique d'interface.

La déformation élastique des languettes au contact de la portion tubulaire de la pièce métallique d'interface permet d'assurer une pression de contact et une force de frottement statique qui s'oppose aux déplacements relatifs axiaux entre la butée et la pièce métallique d'interface. La butée est donc ainsi particulièrement adaptée à une pièce métallique d'interface nue, ou plus généralement à une pièce métallique d'interface dont la portion tubulaire est nue, c'est-à-dire dépourvue d'un revêtement caoutchouc.

Selon un mode de réalisation, la douille de fixation tubulaire comporte plusieurs languettes élastiques angulairement équi-réparties autour de l'axe de référence du couvercle. La portion tubulaire de la pièce métallique d'interface se trouve alors pincée entre les languettes élastiques.

Le couvercle présente un fond destiné à venir en appui axial contre une portion de la pièce métallique d'interface s'étendant radialement vers l'extérieur par rapport à l'axe de référence de la pièce métallique d'interface. Le fond s'étendant radialement vers l'extérieur par rapport à la douille et recouvre le palier.

Selon un mode de réalisation, le couvercle est monobloc. Il s'agit préférentiellement d'une pièce en plastique qui peut le cas échéant être surmoulée sur un insert métallique.

Selon un mode de réalisation préféré, le couvercle et/ou la pièce d'appui sont pourvus de crochets de rétention axiale de la pièce d'appui par rapport au couvercle. Ces crochets de rétention axiale assurent la cohésion entre les pièces constitutives de la butée, dans les phases précédant la fixation finale de la butée sur le véhicule, y compris la phase de pré-assemblage de la butée sur la pièce métallique d'interface.

Selon un mode de réalisation préféré, la ou les languettes ont chacune une base d'ancrage à la douille de fixation, et extrémité libre mobile plus éloignée de la pièce d'appui que la base d'ancrage. Après assemblage, les languettes travaillent alors en traction sous le poids de la butée de suspension, suspendue à la pièce métallique d'interface.

Selon un autre aspect de l'invention, celle-ci a trait à une butée de suspension pour une jambe de suspension d'une caisse de véhicule, la jambe étant pourvue d'un ressort à boudin, la butée de suspension étant destinée à être solidarisée à une pièce métallique d'interface à la caisse du véhicule, la pièce métallique d'interface comportant une portion tubulaire définissant un axe de référence de la pièce métallique d'interface, la butée comportant :
- un palier de butée définissant un axe de rotation de la butée et pourvu d'une rondelle métallique inférieure tournant par rapport à une rondelle métallique supérieure ;
- une pièce d'appui pour transmettre à la rondelle inférieure des efforts exercés par le ressort ; et
- un couvercle recouvrant la rondelle supérieure et délimitant avec la pièce d'appui un logement pour le palier, le couvercle comportant une douille de fixation tubulaire destinée à coopérer avec la portion tubulaire de la pièce métallique d'interface et définissant un axe géométrique de référence du couvercle, la douille de fixation tubulaire étant pourvue d'une ou plusieurs languettes élastiques faisant saillie radialement vers l'axe de référence du couvercle et apte à se déformer de manière élastique lors de l'emmanchement de la douille de fixation tubulaire sur la portion tubulaire de la pièce métallique d'interface.

Suivant un autre aspect de l'invention, celle-ci a trait à un dispositif de butée de suspension pour une jambe de suspension d'une caisse de véhicule, la jambe étant pourvue d'un ressort à boudin, le dispositif comportant :
- une pièce métallique d'interface avec la caisse du véhicule, la pièce métallique d'interface comportant une portion tubulaire, et
- une butée de suspension telle que précédemment décrite, emmanchée sur la portion tubulaire de la tôle d'interface.

La pièce métallique d'interface est dépourvue de revêtement caoutchouc et peut par exemple être constituée par une tôle, notamment une tôle emboutie, ou par une pièce d'aluminium formée par moulage à injection.

Suivant un mode de réalisation préféré, la portion tubulaire de la pièce métallique d'interface présente une face extérieure cylindrique. D'autres formes sont toutefois possibles. La portion tubulaire de la pièce métallique d'interface peut notamment présenter une face extérieure tronconique, préférentiellement évasée vers son extrémité libre, donc vers le bas, de manière à favoriser la rétention axiale de la butée de suspension. Un tel tronc de cône a de préférence un angle solide relativement faible, par exemple inférieur à 10°, et de préférence entre 1° et 5°.

Suivant un mode de réalisation, la portion tubulaire de la pièce métallique d'interface présente une face extérieure texturée, par exemple striée, pour garantir une adhérence de surface optimale. Elle peut également présenter une gorge annulaire dans laquelle viennent s'accrocher la ou les languettes.

Préférentiellement, la douille de fixation tubulaire est en contact avec la portion tubulaire de la pièce métallique d'interface uniquement au niveau des languettes élastiques. En d'autres termes, un jeu subsiste entre la section tubulaire de la pièce métallique d'interface et la douille tubulaire du couvercle qui l'entoure, excepté au niveau des languettes élastiques. Ceci permet, dans les phases précédant la fixation définitive de la butée de suspension à la caisse du véhicule, et pour cette fixation elle-même, de repositionner finement la butée par rapport à la pièce métallique d'interface.

Suivant un autre aspect de l'invention, celle-ci a trait à un couvercle pour la butée de suspension précédemment décrite, comportant notamment un fond d'appui pour un palier de butée, et une douille de fixation tubulaire définissant un axe géométrique de référence du couvercle, la douille de fixation tubulaire comportant une ou plusieurs languettes élastiques faisant saillie radialement vers l'axe de référence du couvercle et aptes à se déformer de manière élastique lorsque la douille de fixation tubulaire est emmanchée sur une portion tubulaire d'une pièce métallique d'interface avec la caisse du véhicule.

Suivant un autre aspect de l'invention, celle-ci a trait à une méthode pour monter une butée de suspension à une caisse de véhicule, comportant les étapes suivantes :
- un palier de butée est placé dans un logement constitué entre une pièce d'appui et un couvercle pourvu d'une douille de fixation tubulaire, le couvercle étant accroché à la pièce d'appui de sorte à former un sous-ensemble cohérent constituant la butée de suspension ;
- puis le sous-ensemble cohérent constituant la butée de suspension est emmanché sur une portion tubulaire d'une pièce métallique d'interface solidarisée à la caisse du véhicule, provoquant une déformation élastique de languettes saillantes de la douille de fixation tubulaire assurant le maintien de la butée de suspension.

### BREVE DESCRIPTION DES FIGURES

D'autres caractéristiques et avantages de l'invention ressortiront à la lecture de la description qui suit, en référence aux figures annexées, qui illustrent :
- la figure 1, une vue en coupe d'une butée de suspension selon un mode de réalisation de l'invention ;
- la figure 2, une vue en coupe de la butée de suspension de la figure 1, montée sur une pièce métallique d'interface avec la caisse d'un véhicule.

### DESCRIPTION DETAILLEE D'UN MODE DE REALISATION

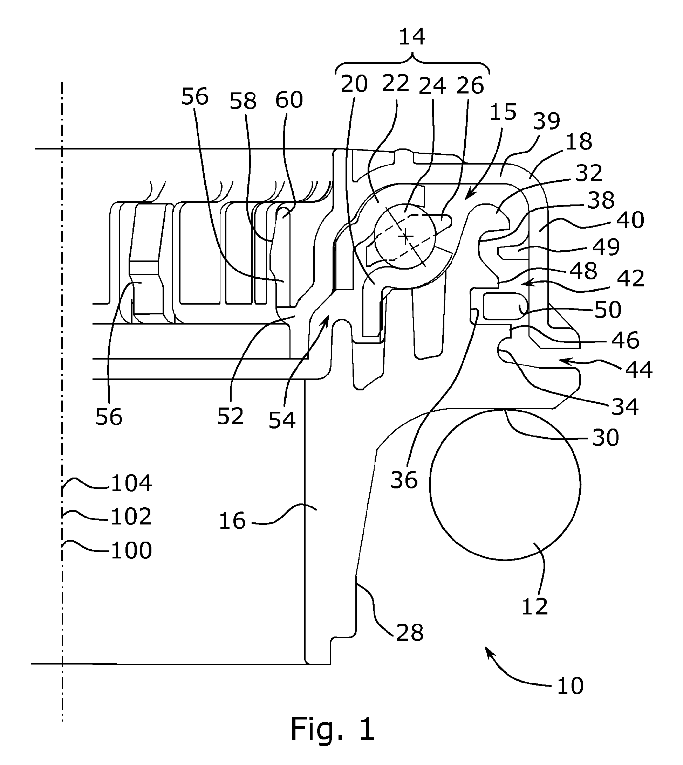

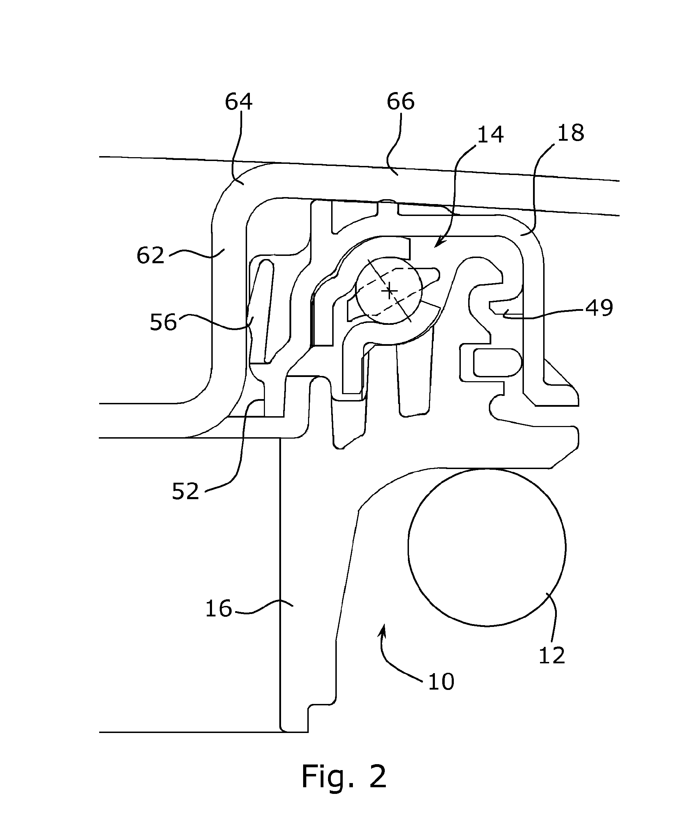

Sur la figure **1** est représenté une butée de suspension **10** destinée à constituer un sous-ensemble d'interface pivotant entre une spire supérieure d'un ressort à boudin **12** (figure **2****)** et la caisse d'un véhicule. La butée de suspension **10** comporte un palier **14** assurant la liaison pivotante autour d'un axe géométrique de rotation **100,** ce palier **14** étant logé dans une cavité annulaire **15** entre une pièce d'appui inférieur **16** sous laquelle vient prendre appui la spire supérieure du ressort **12,** et un couvercle de protection **18.** Le cas échéant, des blocs filtrants (non représentés) peuvent être prévu entre la spire supérieure du ressort et la pièce d'appui, et/ou au dessus du couvercle. Dans l'exemple considéré, le palier **14** est un palier à roulement constitué d'une rondelle inférieure **20** et d'une rondelle supérieure 22 formant des chemins de roulement pour des corps roulants **24** qui sont par ailleurs guidés par une cage de guidage **26.** La rondelle inférieure **20** repose sur des reliefs ou godrons de la pièce d'appui inférieur **16** prévus à cet effet, alors que la rondelle supérieure est logée dans le couvercle **18.**

La pièce d'appui **16** comporte, du côté opposé au palier, une jupe cylindrique **28** de guidage du ressort, et un épaulement transversal 30 d'appui du ressort **12.** Entre l'épaulement **30** et le ressort **12** peut être interposée l'extrémité annulaire d'une manchette en accordéon (non représentée) destinée à la protection de l'amortisseur contre les pollutions extérieures, cette extrémité de la manchette formant le cas échéant un filtre mécanique entre le ressort et la pièce d'appui inférieur **16,** permettant notamment de limiter la transmission à la caisse du véhicule des bruits de roulement de la roue. La pièce d'appui **16** comporte en outre une paroi annulaire **32** située radialement à l'extérieur du palier **14** et se projetant vers le couvercle **18,** cette paroi **32** présentant plusieurs gorges annulaires, **34, 36, 38,** ici au nombre de trois, ouvertes radialement vers le couvercle **18.**

Le couvercle **18** présente un fond **39** et une jupe extérieure **40** disposée en regard de cette paroi annulaire **32.** Le couvercle **18** et la pièce d'appui **16** sont agencés de manière à ne pas venir en contact direct l'un avec l'autre et à former entre eux un passage annulaire en labyrinthe **42,** tirant profit des gorges annulaires **34, 36, 38** de la paroi annulaire **32** de la pièce d'appui **16.** Dans cet exemple de réalisation, le labyrinthe **42** est constitué d'un tronçon d'entrée annulaire **44** essentiellement radial présentant un fond formé par la gorge annulaire **34,** d'un deuxième tronçon au niveau de la gorge annulaire formant une chambre reliée au tronçon d'entrée **44** par une ouverture annulaire axiale **46** de faible largeur, et d'un troisième tronçon formé au niveau de la gorge annulaire **38,** reliée au deuxième tronçon par une ouverture annulaire de faible largeur **48.** Le couvercle est pourvu de crochets élastiques **49** pénétrant dans la gorge annulaire **38** et en recouvrement radial avec l'extrémité supérieure de la paroi annulaire **32.**

Grâce aux crochets élastiques **49,** la butée de suspension **10** telle que représentée sur la figure **1** constitue un sous-ensemble cohérent, le couvercle **18** et la pièce d'appui **16** étant maintenus accrochés l'un à l'autre de façon telle que le palier de butée **14** ne se désassemble pas.

Un joint d'étanchéité mobile **50** est logé dans la chambre **36** du deuxième tronçon. Le joint **50** est en appui radial glissant contre la jupe **40** du couvercle et est dimensionné de façon à présenter avec la pièce d'appui **16** un jeu fonctionnel axial et radial. Lors de sollicitations mécaniques importante induisant des déformations ou des déplacements relatifs entre la pièce d'appui **16** et le couvercle **18,** le joint d'étanchéité **50** est susceptible d'entrer en contact avec une paroi de la pièce d'appui **16,** mais cet éventuel double contact glissant avec la pièce d'appui **16** et le couvercle **18** ne génère qu'un très faible couple de frottement. Par ailleurs, le joint **50** peut être amené à ce déplacer axialement pour refermer le passage **48** entre le deuxième et le troisième tronçon, s'il subit une pression importante.

Le couvercle présente en outre une douille intérieure tubulaire **52** délimitant avec la pièce d'appui un passage **54** à la périphérie intérieure de la butée, passage qui peut également être conformé en labyrinthe. La douille **52** épouse une enveloppe généralement cylindrique, et définit donc un axe géométrique de référence **102** du couvercle, qui sur les dessins est confondu avec l'axe de rotation **100** du palier **14**

La douille **52** est équipée d'une pluralité de languettes élastiques **56** angulairement équi-réparties à sa périphérie, chaque languette présentant une base d'ancrage à la douille et une extrémité libre **60,** tournée vers le haut, à l'opposé de la pièce d'appui **16.** Les languettes **56** présente une face de contact, tournée radialement vers l'intérieur, et incliné par rapport à l'axe de référence du couvercle. Sur la figure **1****,** ces languettes **56** sont représentées non déformée, avant montage du sous-ensemble formant la butée sous la caisse du véhicule.

Sur la figure 2, la butée **10** est représentée après assemblage sous la caisse du véhicule. Plus précisément, la douille 52 du couvercle **18** est emmanchée sur une portion cylindrique **62** d'une pièce métallique d'interface **64** fixée à la caisse du véhicule ou faisant partie intégrante de la caisse du véhicule. La portion cylindrique **62** permet de définir un axe géométrique de référence **104** de la pièce métallique qui, sur la figure **2****,** est confondu avec l'axe de rotation 100 du palier et l'axe géométrique de référence du couvercle **102.** La pièce métallique d'interface **64** présente en outre une portion sensiblement plane **66,** s'étendant radialement vers l'extérieur à partir de la portion cylindrique **62,** pour former une portée en contact avec le fond **39** du couvercle **18.** Le diamètre de la portion cylindrique **62** de la pièce métallique **64** est inférieur à celui de la douille **52** du couvercle mais plus grand que le diamètre d'un cylindre géométrique tangent aux languettes élastiques **56** au repos, de sorte que les languettes **56** se trouvent déformées au contact de la portion cylindrique **62** et maintiennent la butée de suspension **10** suspendue à la portion cylindrique **62** par frottement. On comprend que lors de l'emmanchement de la douille **52** sur la portion cylindrique **62,** les faces inclinées **58** des languettes ont permis un guidage et un centrage de la butée de suspension **10,** de sorte que l'axe géométrique de référence du couvercle soit confondu avec l'axe géométrique de référence de la pièce métallique **64.** Les languettes se sont déformées en flexion autour d'un ancrage constitué à leur base d'ancrage avec la douille **52.**

Suite à cette étape de montage, il est possible de finaliser la fixation des autres éléments de la jambe de suspension, incluant notamment le ressort hélicoïdal 12 et un amortisseur télescopique, reliés au moyeu de roue.

Naturellement diverses variantes sont possibles.

Selon une première variante non représentée, la face extérieure cylindrique de la portion tubulaire peut être texturée pour augmenter le coefficient de frottement avec les languettes.

Selon une deuxième variante, la portion tubulaire de la pièce d'interface peut être pourvue d'une gorge annulaire permettant un accrochage des languettes.

Selon une troisième variante, la portion tubulaire peut être conformée en tronc de cône, évasée vers le bas, donc vers la pièce d'appui, pour permettre également un accrochage des languettes.

## Revendications

1. Butée de suspension (10) pour une jambe de suspension d'une caisse de véhicule, la jambe étant pourvue d'un ressort à boudin (12), la butée de suspension (10) étant destinée à être solidarisée à une pièce métallique d'interface (64) avec la caisse du véhicule, la pièce métallique d'interface (64) comportant une portion tubulaire (62), la butée comportant :
- un palier de butée (14) ;
- une pièce d'appui (16) pour transmettre au palier de butée (14) des efforts exercés par le ressort (12) ; et
- un couvercle (18) délimitant avec la pièce d'appui (16) un logement (15) pour le palier, le couvercle comportant une douille de fixation tubulaire (52) destinée à s'emmancher sur la portion tubulaire de la pièce métallique d'interface et définissant un axe géométrique de référence (102) du couvercle,
**caractérisée en ce que** le couvercle (18) est pourvu d'une ou plusieurs languettes élastiques (56) faisant saillie radialement vers l'axe de référence du couvercle (102) et aptes à se déformer radialement de manière élastique lorsque la douille de fixation tubulaire (52) est emmanchée sur la portion tubulaire (62) de la pièce métallique d'interface (64).

2. Butée selon la revendication 1, **caractérisée en ce que** la douille de fixation tubulaire (52) comporte plusieurs languettes élastiques (56) angulairement équiréparties autour de l'axe de référence (102) du couvercle.

3. Butée selon l'une quelconque des revendications précédentes, **caractérisée en ce que** le couvercle (18) présente un fond (39) destiné à venir en appui axial contre une portion (66) de la pièce métallique d'interface (64).

4. Butée selon l'une quelconque des revendications précédentes, **caractérisée en ce que** le couvercle (18) et/ou la pièce d'appui (16) sont pourvus de crochets de rétention axiale de la pièce d'appui par rapport au couvercle.

5. Butée selon l'une quelconque des revendications précédentes, **caractérisée en ce que** la ou les languettes (56) ont chacune une base d'ancrage à la douille de fixation, et extrémité libre (60) mobile plus éloignée de la pièce d'appui (16) que la base d'ancrage.

6. Dispositif de butée de suspension pour une jambe de suspension d'une caisse de véhicule, la jambe étant pourvue d'un ressort à boudin (12), le dispositif comportant :
- une pièce métallique (64) d'interface avec la caisse du véhicule, la pièce métallique d'interface comportant une portion tubulaire (62), et
- une butée de suspension (10) selon l'une quelconque des revendications précédentes, emmanchée sur la portion tubulaire de la pièce métallique d'interface (64).

7. Dispositif selon la revendication 6, **caractérisé en ce que** la portion tubulaire (62) de la pièce métallique d'interface présente une face extérieure cylindrique ou tronconique.

8. Dispositif selon l'une quelconque des revendications 6 à 7, **caractérisé en ce que** la portion tubulaire de la pièce métallique d'interface présente une face extérieure texturée ou pourvue d'une gorge d'accrochage annulaire.

9. Dispositif selon l'une quelconque des revendications 6 à 8, **caractérisé en ce que** le couvercle (18) est en contact avec la portion tubulaire (62) de la pièce métallique d'interface uniquement au niveau des languettes élastiques (56).

10. Couvercle pour une butée de suspension selon l'une quelconque des revendications 1 à 5, comportant un fond (39) d'appui pour un palier de butée, et une douille de fixation tubulaire (52) définissant un axe géométrique de référence du couvercle (102), la douille de fixation tubulaire comportant une ou plusieurs languettes élastiques (56) faisant saillie radialement vers l'axe de référence du couvercle (102) et apte à se déformer de manière élastique lorsque la douille de fixation tubulaire (52) est emmanchée sur une portion tubulaire (62) d'une pièce métallique (64) d'interface avec la caisse du véhicule.

11. Méthode de montage d'une butée de suspension à une caisse de véhicule, comportant les étapes suivantes :
- un palier de butée (14) est placé dans un logement (15) constitué entre une pièce d'appui (16) et un couvercle (18) pourvu d'une douille de fixation tubulaire (52), le couvercle (18) étant accroché à la pièce d'appui de sorte à former un sous-ensemble cohérent constituant la butée de suspension (10) ;
- puis le sous-ensemble cohérent constituant la butée de suspension (10) est emmanché sur une portion tubulaire (62) d'une pièce métallique d'interface (64) solidarisée à la caisse du véhicule, provoquant une déformation élastique de languettes (56) saillantes de la douille de fixation tubulaire assurant le maintien de la butée de suspension (10).
